# EUROPEAN PATENT SPECIFICATION

(11) **EP 2 867 241 B1**
(45) Date of publication and mention of the grant of the patent: **07.09.2016**
(21) Application number: 13730266.7
(22) Date of filing: 21.06.2013
(51) Int. Cl.: C07F 7/00, C08F 4/16, B01J 21/06

(54) **NOVEL TITANIUM CATALYST END PROCESS FOR THE PREPARATION THEREOF**
TITANGLYCOLATKATALYSATOR UND PROZESS ZUR HERSTELLUNG DAVON
CATALYSEUR GLYCOLATE DE TITANIUM AND SON PROCÉDÉ DE PRÉPARATION

(30) Priority: 28.06.2012 EP 12004846
(43) Date of publication of application: 06.05.2015
(73) Proprietor: Saudi Basic Industries Corporation, Riyadh 11422 (SA)
(72) Inventor: SAINANI, Jaiprakash Bijlal, Baroda 391775 (IN); VIMALKUMAR, Mahendrabhai Patel, Baroda 391775 (IN)
(74) Representative: Sabic Intellectual Property Group
(86) International application number: PCT/EP2013/063026
(87) International publication number: WO 2014/001219

(56) References cited:
- WO-A1-2004/065452

## Description

The invention relates to a process for the preparation of a titanium glycolate, the titanium glycolate obtainable by said process, a catalyst composition comprising said titanium glycolate, to a process for the preparation of a polyester or for the transesterification of an ester in the presence of said catalyst composition and to a polyester obtainable by the process.

Such a process is known from US2,920,089. For example, in example 5, the reaction of tetraisopropyl titanate with ethylene glycol in a molar ratio of tetraisopropyl titanate to ethylene glycol of 1:2 is described. A solid precipitate was formed from which isopropyl alcohol was distilled off. The resulting white solid was washed with benzene and dried to obtain the titanium glycolate catalyst.

A process for the preparation of titanium glycolate is disclosed in WO 2004/065452. It is the object of the invention to provide an improved process.

This object is achieved by a process for the preparation of titanium glycolate comprising the steps of reacting a titanium alkoxide with ethylene glycol in a molar ratio of the titanium alkoxide to ethylene glycol from 1:2 to 1:4 in a protic solvent at a temperature in the range from 50 to 100°C to form titanium glycolate.

It has surprisingly been found that titanium glycolate can be formed by using the process of the invention using a protic solvent. In the process of the invention, titanium glycolate is formed as a solid that can be easily separated from the solvent by filtration. Contrary to the process known from US2,920,089, there is no need to distill off isopropanol (even when isopropanol is used as the protic solvent) before washing. Therefore, the process of the invention provides an easier process to titanium glycolate.

Furthermore, because of the fact that no distillation is necessary, the reaction time for the formation of titanium glycolate is shorter. This makes the process of the invention more economical, since the shorter reaction times allow for the production of more batches of titanium glycolate in the same reactor during the same period of time.

Examples of suitable titanium alkoxides that may be employed in the process of the present invention include but are not limited to titanium alkoxides, wherein the alkoxides have 2 to 6C-atoms, preferably 2 to 4C atoms. Examples of such alkoxides include but are not limited to ethyloxide, n-propyloxide, isopropyloxide, n-butyloxide, isobutyloxide and tert-butyloxide. Preferably titanium propoxide or titanium butoxide, more preferably titanium isopropoxide (TIP) or titanium n-butyloxide (TIB) is used.

Ethylene glycol is also known as monoethylene glycol (MEG).

The molar ratio of titanium alkoxide to ethylene glycol is from 1:2 to 1:4, preferably from 1:2 to 1:3, for example around 1:2.5.

With protic solvent is meant a solvent that has the ability to form hydrogen bonds, for example a solvent having an OH or NH bond. Preferably, the protic solvent is an alcohol, more preferably an alkanol (alkyl alcohol), for example the protic solvent may be chosen from the group consisting of ethanol, n-propanol, isopropyl alcohol, n-butanol, isobutanol, tert-butanol and mixtures thereof, preferably isopropanol.

The terms isopropanol and isopropyl alcohol are used interchangeably herein.

Preferably, the structure of the alkyl alcohol used as protic solvent corresponds to the structure of the alkoxide in the titanium alkoxide. For example, in case titanium isopropoxide is used, the preferred protic solvent is isopropanol, in case titanium isobutyloxide is used, the preferred solvent is isobutanol, etc.

The temperature of the process of the invention may be performed at a temperature from 50 to 100°C, for example at a temperature in the range from 70-90°C. It is to be understood that the temperatures indicated apply when the process is conducted at standard atmospheric pressure (101.3kPa). Should a different pressure be used, preferably, the temperature is chosen such that the new pressure-temperature combination corresponds to the standard atmospheric pressure - preferred temperature combinations as indicated herein.

Preferably, the process is performed at the boiling point temperature of the protic solvent used, for example when using isopropanol, the temperature is preferably 82.5°C (at standard atmospheric pressure).

The titanium glycolate produced in the process of the invention may be further isolated by using a method known per se. The invention therefore also relates to a process according to the invention, further comprising the steps of isolating the titanium glycolate.

The person skilled in the art is aware of which methods may be used to isolate the titanium glycolate (which is a solid at the conditions given) formed in the process of the invention. For example filtration and subsequent purification steps such as consecutive cycles of drying and washing followed by a final drying step may be used to isolate the titanium glycolate.

Preferably, the process of the invention does not comprise the step of distilling off the protic solvent.

In another aspect, the invention relates to the titanium glycolate obtained by or obtainable by the process of the invention.

Titanium glycolate can suitably be used as a catalyst for several processes, such as in the preparation of polyesters, for example polyester terephthalate; or in a transesterification process.

The titanium glycolate obtained or obtainable by the process of the invention is a novel compound, since when used in a catalyst composition, it displays properties that are different from the known titanium glycolates.

The catalyst composition of the invention may have one or more of the following advantageous properties as in a process for the preparation of a polyester it may provide:
a high rate of polymerization, short reaction times, high yields and/or improved properties to the polyester produced, such as increased molecular weight, decreased yellowish colour, a higher intrinsic viscosity, a higher optical clarity, decreased absorption of water, improved chemical resistance, for example to alkalis and/or when drawn into a film, for example improved strength, good thermal stability Therefore, the invention also relates to a catalyst composition comprising the titanium glycolate of the invention.

A catalyst composition that is particularly suitable for catalysing esterification and transesterification reactions is for example a catalyst composition which in addition to titanium glycolate, further comprises an alkali metal glycolate.

Preferably, the alkali metal is sodium and the glycolate has the formula Na-O-CH₂-CH₂-OH.

Therefore, the invention also relates to a catalyst composition of the invention further comprising an alkali metal glycolate.

Preferably, according to US20060205917, hereby incorporated by reference, such catalyst composition further comprises an alkaline metal glycolate in a molar ratio of the titanium glycolate and the alkali metal glycolate from about 1.25:1 to about 100:1.

A catalyst composition of the invention which further comprises an alkali metal glycolate can suitably be used in process for the preparation of polyesters from a carboxylic acid compound and an alcoholic compound, for example a process for the preparation of a polyester, wherein a dicarboxylic acid is esterified with a diol, followed by transesterification. This catalyst composition is also particularly suitable for the preparation of polyethylene terephthalate.

The dicarboxylic acid in such preparation is a dicarboxylic acid of formula HOOC-R-COOH, wherein R is, linear or branched, an alkylene group, an arylene group, an alkenylene group or a combination thereof. Preferably, R has about 2 to about 30, preferably about 4 to about 15 carbon atoms.

Preferably, the dicarboxylic acid compound is selected from the group of terephthalic acid, isophthalic acid, nephthalenic acid, succinic acid, adipic acid, phthalic acid, glutaric acid, oxalic acid, maleic acid and combinations thereof. More preferably, the dicarboxylic acid is terephthalic acid.The carboxylic acid compound may be an oligomer having repeating units derived from a carboxylic acid.

The alcoholic compound may be an alkylene glycol of the formula HO-R'-OH, a polyalkylene glycol having the formula HO-[R"-O]ₙ-H or combinations thereof, wherein R' stands for an alkylene group, linear or branched, having 2 to 10, preferably 2 to 4 carbon atoms, and wherein R" being the same or different, is an alkylene group having 1 to 10, preferably 1 to 5 carbon atoms.

Further, the alcoholic compound may be selected from the group of ethylene glycol, propylene glycol, isopropylene glycol, butylene glycol, 1-methyl propylene glycol, pentylene glycol, neopentylene glycol and combinations thereof.

The process for the preparation of the polyester using the catalyst composition of the invention further comprising an alkali metal glycolate may be performed at a temperature from about 150°C to about 500°C, for example at a temperature from about 250°C to about 300°C.

The pressure of the process for the preparation of the polyester using the catalyst composition of the invention further comprising an alkali metal glycolate may be chosen in the range from about 0.001 to about 10 atmospheres.

The molar ratio of the alcohol compound to the carboxylic acid compound may be in the range from about 0.1:1 to about 10:1, for example in the range from about 1:1 to about 3:1.

It is preferred that titaniumglycolate is used at a concentration of 1 to 70ppm , for example 10 to 50ppm based on the carboxylic acid compound. Preferably, the alkali metal glycolate is preferably used at a concentration of 1 to 70ppm, for example at a concentration of 10 to 50ppm based on the carboxylic acid compound.

A catalyst composition that is also particularly suitable for the preparation of polyethylene terephthalate comprises the titanium glycolate of the invention, an antimony (Sb)-compound, a zinc (Zn)-compound and optionally a phosphorous (P)-compound.

Therefore, the invention also relates to a catalyst composition comprising the titanium glycolate of the invention and further comprising an antimony (Sb)-compound, a zinc (Zn)-compound and optionally a phosphorous (P)-compound.

Suitable antimony (Sb)-compound include SB(III) and Sb(V) compounds as recognized in the art as being a polycondensation catalyst, preferably those SB(III) and Sb(V) compounds that are soluble in ethyleneglycol. Examples of suitable Sb-compounds include but are not limited to antimony triacetate, antimony trioxide, antimony tricarbonate, antimony glycolates and mixtures thereof. Preferably, the Sb-compund is antimony triacetate.

Suitable zinc (Zn)- compounds include the compounds that are recognized in the art as being a polycondensation catalyst, preferably those that are soluble in ethylene glycol. Examples of suitable Zn-compounds include zinc diacetate, zinc oxide, zinc carbonate, zinc peroxide, zinc hydroxide, zinc halide, zinc sulphide, zinc glycolate and mixtures thereof. Preferably, the Zn-compound is zinc-diacetate.

In addition to the Sb-compound, the Zn-compound and the titanium glycolate, there may also be other metal components present in the catalyst composition. Examples of such components include cobalt (Co)-compounds.

Furthermore, said catalyst composition may optionally also include a P-compound. Suitable phosphorous compounds include the compounds as recognized in the art as being a stabilizing compound in polyesters. Examples of suitable compounds include phosphoric acid, phosphorous acid, polyphosphoric acid, phosphate esters like triethyl phosphate or tributyl phosphate and mixtures thereof. Preferably, phosphoric acid is used, which results in good polycondensation reactivity and good thermal stability of PET, in addition to being a convenient and inexpensive additive that is also allowed for food-contact applications. Preferably, the P-compound is phosphoric acid.

In a special embodiment, the invention also relates to a catalyst composition comprising the titanium glycolate of the invention, antimony triacetate, zinc diacetate and optionally phosphoric acid.

In another aspect, the invention relates to a process for trans-esterification of an ester comprising the step of reacting an ester with an alcohol in the presence of a catalyst composition of the invention.

In another aspect, the invention relates to a process for the preparation of a polyester comprising the step of reacting a carboxylic acid compound with an alcoholic compound in the presence of a catalyst composition of the invention.

When the catalyst composition of the invention further comprising an alkali metal glycolate is used in a process for the preparation of a polyester, preferably, the total content of the metals in the catalyst composition is from about 1 to 70ppm, for example from about 10 to about 50ppm based on the carboxylic acid compound.

Preferably, in a process for preparation of polyethylene terephthalate from for example ethylene glycol, terephthalic acid and optionally up to 6mol% comonomer, the process uses the catalyst composition of the invention further comprising a Sb -compound, a Zn-compound and optionally a P-compound wherein the amount of titanium glycolate, Sb-compound and Zn-compound are chosen such that the concentration of Sb in polyethylene terephthalate is from 70 to 160ppm; preferably at least 80, for example at least 90, for example at least 100, for example at least 110, for example at least 120ppm and/or for example at most 155, for example at most 150, for example at most 145ppm, the concentration of Zn in polyethylene terephthalate is from 20 to 70ppm, preferably at least 25, for example at least 35 and/or at most 65, for example at most 60, for example at most 55, for example at most 50, for example at most 45ppm and the concentration of Ti in polyethylene terephthalate is from 0.5 to 20ppm, preferably at least 1, for example at least 1.5 and/or at most 15, for example at most 12, for example at most 10, for example at most 9, for example at most 8, for example at most 7, for example at most 6, for example at most 5, for example at most 4, for example at most 3ppm.

In a preferred way of preparing polyethylene terephthalate, the process uses the catalyst composition of the invention further comprising a Sb -compound, a Zn-compound and optionally a P-compound, wherein the amount of titanium glycolate, Sb-compound and Zn-compound are chosen such that the concentration of Sb in the polyethylene terephthalate is 120-145ppm, the concentration of Zn in the polyethylene terephthalate is 30-45 ppm and the concentration of Ti in the polyethylene terephthalate is 1.0-4.0ppm.

In a preferred way of preparing polyethylene terephthalate, the process uses the catalyst composition of the invention further comprising a Sb -compound, a Zn-compound and optionally a P-compound wherein the amount of titanium glycolate, Sb-compound and Zn-compound are chosen such that the concentration of Sb in the polyethylene terephthalate is 130-140ppm, the concentration of Zn in the polyethylene terephthalate is 35-45 ppm and the concentration of Ti in the polyethylene terephthalate is 1.0-3.0ppm.

In the process for preparing polyethylene terephthalate, the process preferably uses the catalyst composition of the invention further comprising a Sb -compound, a Zn-compound and optionally a P-compound, wherein the total amount of metal components in the polyethylene terephthalate is preferably not more than 200ppm, for example not more than 195, for example not more than 190, for example not more than 185 ppm and-or preferably at least 130, for example at least 135, for example at least 140, for example at least 145ppm.

If present in the catalyst composition of the invention, the P-compound is typically added in the process for the preparation of polyethylene terephthalate (PET) in an amount resulting in 5-100 ppm P based on PET mass, preferably at least 10, for example at least 12, for example at least 14 ppm and/or for example at most 80, for example at most 60, for example at most 50, for example at most 40, for example at most 30, for example at most 25 ppm. The advantage of such concentration is to retain a high polycondensation rate also in solid state, but to lower the rate of acetaldehyde formation in the PET, especially regeneration during processing in the melt.

In case a P-compound is present in the catalyst composition of the invention, in a preferred way of preparing polyethylene terephthalate, the process preferably uses the catalyst composition of the invention further comprising a Sb -compound, a Zn-compound and optionally a P-compound wherein the amount of titanium glycolate, Sb-compound, Zn-compound and P-compound are chosen such that the concentration of Sb in the polyethylene terephthalate is 120-145ppm, the concentration of Zn in the polyethylene terephthalate is 30-45 ppm, the concentration of Ti in the polyethylene terephthalate is 1.0-4.0ppm and the concentration of P in the polyethylene terephthalate is 10-50ppm.

In case a P-compound is present in the catalyst composition of the invention, in a more preferred way of preparing polyethylene terephthalate, the process preferably uses the catalyst composition of the invention further comprising a Sb -compound, a Zn-compound and optionally a P-compound wherein the amount of titanium glycolate, Sb-compound, Zn-compound and P-compound are chosen such that the concentration of Sb in the polyethylene terephthalate is 130-140ppm, the concentration of Zn in the polyethylene terephthalate is 35-45 ppm, the concentration of Ti in the polyethylene terephthalate is 1.0-3.0ppm and the concentration of P in the polyethylene terephthalate is 10-30ppm.

In the process for the preparation of polyethylene terephthalate, at least one comonomer may be used.

The presence of comonomer in polyethylene terephthalate will affect the crystallisation behaviour, and the melting point of the polymer, as is known to a person skilled in the art. A high content of comonomer may results in a polyethylene terephthalate copolyester that is substantially amorphous. Typically, an amount of comonomer is chosen that results in a crystallisable polyester than can be melt-processed at somewhat lower temperature settings than homopolymer PET into products with high optical clarity, but which still results in a formed article - e.g. a stretch/blow moulded container- showing good mechanical properties (due to orientation-induced crystallisation). For this reason, the amount of comonomer used in the process according to the invention is preferably at least about 0.5, for example at least 1.0, for example at least 1.5mol% and-or at most 5, for example at most 4, for example at most 3mol%.

Suitable comonomers may be selected from di- or polycarboxylic acids or their ester-forming derivatives, from di- or poly-hydroxy compounds or their ester-forming derivatives, from hydroxycarboxylic acids or their ester-forming derivatives, and from combinations thereof. Preferably, a di-functional compound is used as comonomer.

Suitable carboxylic acids include dicarboxylic acids of the formula HOOC-R-COOH, wherein R is a -linear or branched- alkylene group, an arylene group, an alkenylene group, or a combination thereof. Preferably, R has about 2 to 30, preferably about 4 to 15 carbon atoms. Suitable examples of carboxylic acid compounds include saturated aliphatic dicarboxylic acids such as oxalic acid, malonic acid, succinic acid, gluratic acid, adipic acid, pimelic acid, suberic acid, azelaic acid, sebacic acid, decanedicarboxylic acid, dodecanedicarboxylic acid, tetradecanedicarboxylic acid, hexadecanedicarboxylic acid, 1,3-cyclobutanedicarboxylic acid, 1,3-cyclopentanedicarboxylic acid, 1,2-cyclohexanedicarboxylic acid, 1,3-cyclohexanedicarboxylic acid, 1,4-cyclohexanedicarboxylic acid, 2,5-norbornanedicarboxylic acid, and dimeric acid; unsaturated aliphatic dicarboxylic acids such as fumaric acid, maleic acid, and itaconic acid; and aromatic dicarboxylic acid such as orthophthalic acid, isophthalic acid, 5-(alkali metal)sulfoisophthalic acid, diphenic acid, 1,3-naphthalenedicarboxylic acid, 1,4-naphthalenedicarboxylic acid, 1,5-naphthalenedicarboxylic acid, 2,6-naphthalenedicarboxylic acid, 2,7-naphthalenedicarboxylic acid, 4,4,-biphenyldicarboxylic acid, 4,4'-biphenylsulfonedicarboxylic acid, 4,4'-biphenyl ether dicarboxylic acid, 1,2-bis(phenoxy)ethane-p,p'-dicarboxylic acid, pamoic acid, and anthracenedicarboxylic acid. More preferably, the comonomer is at least one compound selected from the group consisting of isophthalic acid, naphthalenic diacid, succinic acid, adipic acid, phthalic acid, glutaric acid, oxalic acid, and maleic acid. Most preferably, the carboxylic acid compound is isophthalic acid.

Suitable hydroxy-functional compounds include alkylene glycols of the formula HO-R'-OH, a polyalkylene glycol having the formula HO-[R"-O-]n-H, or combinations thereof, wherein R' is an alkylene group, linear or branched, having 3 to about 10, preferably 3 to 4 carbon atoms, and wherein R", being the same or different, is an alkylene group having 1 to about 10, preferably 1 to 5 carbon atoms. Suitable examples of the alcohol-based compound include aliphatic glycols such as 1,2-propylene glycol, 1,3-propylene glycol, diethylene glycol, triethylene glycol, 1,2-butylene glycol, 1,3-butylene glycol, 2,3-butylene glycol, 1,4-butylene glycol, 1,5-pentanediol, neopentyl glycol, 1,6-hexanediol, 1,2-cyclohexanediol, 1,3-cyclohexanediol, 1,4-cyclohexanediol, 1,2-cyclohexanedimethanol, 1,3-cyclohexanedimethanol, 1,4-cyclohexanedimethanol, 1,4-cyclohexanediethanol, 1,10-decamethylene glycol, 1,12-dodecanediol, polyethylene glycol, poly trimethylene glycol, and polytetramethylene glycol; and aromatic glycols such as hydroquinone, 4,4'-dihydroxybisphenol, 1,4-bis([beta]-hydroxyethoxy)benzene, 1,4-bis([beta]-hydroxyethoxyphenyl)sulfone, bis(p-hydroxyphenyl)ether, bis(p-hydroxyphenyl)sulfone, bis(p-hydroxyphenyl)methane, 1,2-bis(p-hydroxyphenyl)ethane, bisphenol A, bisphenol C, 2,5-naphthalenediol, and glycols obtained by adding ethylene oxide to these glycols. Preferably, the hydroxyl-functional comonomer is at least one compound selected from the group consisting of diethylene glycol, 1,3-propylene glycol, 1,4-butylene glycol, and 1,4-cyclohexanedimethanol. More preferably, diethylene glycol and/or 1,4-cyclohexanedimethanol is used in the process for the preparation of polyethylene terephthalate.

Small amounts of polyhydric alcohols may also be used as comonomer. Suitable examples of polyhydric alcohols include but are not limited to trimethylolmethane, trimethylolethane, trimethylolpropane, pentaerythritol, glycerol, and hexanetriol. Hydroxycarboxylic acids may also be used in combination. Examples of suitable hydroxycarboxylic acids include lactic acid, citric acid, malic acid, tartaric acid, hydroxyacetic acid, 3-hydroxybutyric acid, p-hydroxybenzoic acid, p-(2-hydroxyethoxy)benzoic acid, 4-hydroxycyclohexanecarboxylic acid and their ester-forming derivatives. Also, cyclic esters in combination may be used in present invention. Examples of cyclic esters include ε-caprolactone, β-propiolactone, β-methyl-β-propiolactone δ-valerolactone, glycollide, and lactide.

In a preferred way of operating the process for the preparation of polyethylene terephthalate, a polyethylene terephthalate is made that contains 0.5 to 5 mol%, preferably 1 to 4 mol% of at least one comonomer selected from the group consisting of isophthalic acid, diethylene glycol and 1,4-dicyclohexanedimethanol.

The process for the preparation of polyethylene terephthalate may be peformed batchwise or as a continuous process- as is known in the art. It can be operated in known reactors, as known to a person skilled in the art.

The process for the preparation of polyethylene terephthalate preferably comprises a step a) of esterifying ethylene glycol (EG) and terephthalic acid (TA) and optionally comonomer to form diethylene glycol terephthalate and oligomers (DGT). This step can be performed in various ways and under conditions as known from the art. Typically, this step involves initially making a mixture of the EG, PTA, comonomer, the catalyst composition of the invention, and other additives such as colour correcting agents like cobalt compounds and other soluble colourants. EG is typically applied in a molar excess to TA, for example the EG/TA molar ratio may be from 1.1 to 3.0, preferably 1.5-2.0. This excess EG is later removed during polycondensation. The initial mixture is typically not a solution but a paste or slurry. In addition to preparing the mixture in a separate slurry tank, the esterifcation step may be performed in one or more esterification tanks or reactors, in which the mixture is heated to temperatures in the range 200-300 °C, preferably 230-270 °C, at a pressure of about 0.1-10 MPa. Nitrogen is preferably used to prevent oxidation. Water formed in the reaction is preferably removed from the system. Esterification results in a mixture of diethylene glycol terephthalate and various oligomers, together referred to as DGT.

In step b) of such preferred process for the preparation of polyethylene terephthalate, the obtained DGT mixture is further reacted in one or more reactors operated at elevated temperatures, for example in the range 240-300 °C, preferably at 270-290 °C; under reduced pressure or with an inert gas stream to facilitate removal of formed EG, water, alcohols, aldehydes or other reaction products. This melt-phase polycondensation or polymerisation step is typically operated at a pressure of 50-500 Pa, preferably at about 100 Pa to form a precursor polyester typically having an intrinsic viscosity of about 0.5 to about 0.7 dL/g, preferably 0.60 to 0.65 dL/g.

After the polycondensation step, the polyethylene terephthalate formed may be directly extruded into fibres, filaments, films or strands by employing any method known in the art, such as melt-spinning. Such polyester fibres may be used as industrial or textile fibres for clothing, tire cords, ropes, civil engineering and construction applications, in the form of yarns, woven or non-woven fabrics, knitted products, nets, and the like. PET sheets can be applied for photographic films or for thermo-formable packaging. Alternatively, the process for the preparation of polyethylene terephthalate using the catalyst composition of the invention may further comprise the subsequent steps of c) forming the polyethylene terephthalate into pellets, d) crystallising the pellets, and e) solid-state polycondensing the polyethylene terephthalate (PET). Such a sequence of steps will result in a PET in pellet form that can be easily handled and further processed, and having an intrinsic viscosity (IV) of at least about 0.7 dL/g, preferably IV of about 0.7-1.5 dL/g, more preferably about 0.75 -0.85 d dL/g. Such higher IV, that is a higher molar mass, results in a polyester product with a better combination of properties, especially increased mechanical properties that can meet the stringent requirements for bottles.

Granulating or pelletizing the PET in step c) can be done by applying any known method, and may result in pellets of varying size and shape. In step d), the generally amorphous pellets are first crystallized by heating slowly to a temperature between the crystallisation temperature and crystalline melting point of the polyester, in order to prevent agglomeration of pellets during the subsequent step e) of solid-state polycondensation (SSP). The SSP step may be conducted at a temperature between the glass transition temperature and the melting point of the polyester, preferably at a temperature in a range of about 180 to 220 °C, under reduced pressure or by passing an inert gas stream, preferably a nitrogen stream, over a bed of pellets or granules. Various solid stating processes are known in the art; such processes are for instance described in US4064112 and US4161578. The PET obtained by applying the solid-state polycondensation step is particularly suitable for producing hollow moulded articles, such as tubes, pipes, and containers; using for example an extrusion moulding or an injection-moulding apparatus.

In a PET production process, EG formed is preferably removed from the reaction mixture during the polycondensation step, such that the equilibrium reaction will proceed. The EG removed, also referred to as spent glycol, is preferably re-used or recycled in the process for efficiency and cost control reasons. The EG formed is preferably distilled off from the reactor or reactors applied, and returned to step a), preferably to a paste making step that forms part of step a). The process for the preparation of PET may optionally include the steps of further purifying the EG distilled off as known in the art, but preferably the distilled EG is fed to step a) without additional purification or post-reaction steps. The invention thus also specifically relates to a process for the preparation of polyethylene terephthalate using the catalyst composition of the invention wherein ethylene glycol is removed from step b) and the removed ethylene glycol is recycled back to esterification step a).

It has surprisingly been found that a PET having a neutral colour and a high optical clarity may be obtained using the catalyst composition of the invention even if the ethylene glycol that is formed in the polycondensation step b is separated and again applied in the process.

If a P-compound is present in the catalyst composition of the invention, the P-compound is preferably added after step a), that is, at the end of esterification.

In the process for the preparation of polyethylene terephthalate, the catalyst composition of the invention, for example the catalyst composition comprising the titanium glycolate of the invention and further comprising an alkali metal glycolate or the catalyst composition comprising the titanium glycolate of the invention and further comprising a Sb-compound, a Zn-compound and optionally a P-compound may be used. In such process, the components of the catalyst system, preferably of the catalyst system that is particularly suitable for the preparation of polyethylene terephthalate, may be added together in step a), but one or more components may also be added in part of completely later during the esterification. Preferably, the metal compounds are added together with the raw materials terephthalic acid (TA) and ethylene glycol (EG) and optionally other additives to the paste making step that forms part of step a). The P-compound is preferably added at the end of the esterification step a), for example just before or during transferring the DGT mixture to a subsequent reaction vessel for performing the polycondensation step b), or at the beginning of the polycondensation step b).

In the process for the preparation of polyethylene terephthalate using the catalyst composition of the invention, also other common additives may be added if desired. Such additives can include colourants and colour correcting agents, preferably those soluble in polyethylene terephthalate, to either adjust or correct the natural colour of the PET to a more neutral tone, or to result in a desired colour, like light blue. Colour correcting agents include cobalt-compounds, and/or organic toners like blue or red toners, such as described in US5372864 or US5384377 . Other suitable additives include heat-stabilizers, anti-oxidants, reheating aids, anti-blocking agents, lubricants, acetaldehyde scavenging agents, and the like. The amount of said additives may vary up to several mass percentages, but is generally kept as low as possible, for example at most 5, 4, 3 or 2 mass% based on PET.

In another aspect, the invention also relates to a polyester, for example polyethylene terephthalate obtained or obtainable by the process for the preparation of a polyester, preferably polyethylene terephthalate using a catalyst composition of the invention, for example using the catalyst composition comprising the titanium glycolate of the invention,- a Sb-compound and a Zn-compound and optionally a P-compound as described above or for example using the catalyst composition comprising the titanium glycolate of the invention and an alkali metal glycolate as described above.

The polyester, for example polyethylene terephthalate produced using the catalyst composition of the invention may be used in forming a great variety of articles for many different applications, including fibres, tubes, profiles, sheets, films and packaging articles like thermoformed trays and stretch-blow moulded containers or bottles from injection moulded preforms.

Furthermore, the polyester produced using the catalyst composition of the invention may have a good thermal stability, and in case of polyethylene terephthalate, also a relatively low rate of acetaldehyde regeneration during melt-processing, making the polyester eminently suited for making packaging articles, especially for the packaging of food products, like soft/drink bottles having excellent mechanical, optical and organoleptic properties.

In another aspect, the invention relates to the use of a catalyst composition of the invention for trans-esterification of an ester.

In another aspect, the invention relates to the use of a catalyst composition of the invention for the manufacturing of a polyester, preferably of polyethylene terephthalate.

Although the invention has been described in detail for purposes of illustration, it is understood that such detail is solely for that purpose and variations can be made therein by those skilled in the art without departing from the spirit and scope of the invention as defined in the claims.

It is further noted that the invention relates to all possible combinations of features described herein, preferred in particular are those combinations of features that are present in the claims.

It is noted that the term 'comprising' does not exclude the presence of other elements. However, it is also to be understood that a description on a product comprising certain components also discloses a product consisting of these components. Similarly, it is also to be understood that a description on a process comprising certain steps also discloses a process consisting of these steps.

The invention will now be elucidated by way of the following examples without however being limited thereto.

### Example 1

52.0 g (0.84 mol) of ethylene glycol was added slowly (in an hour) to the mixture of 95.5 g of Titanium isopropoxide (0.336mol) and 100 ml isopropyl alcohol at room temperature. The resulting mixture was heated slowly to 85°C and a gentle refluxed was maintained for another 1 hr. The resulting reaction mixture was cooled to room temperature and the solid was filtered off. The filtered solid was washed with 50 ml of acetone and then dried at 120°C for 3 hours in an oven. The weight of white solid was 55 g (97.6% yield); Titanium content: 28.64wt% on the weight of white solid.

### Comparative Experiment A

183.3 g (0.645 mol) of Titanium isopropoxide was added slowly to 400 g (6.45 mol) of ethylene glycol over 1 hr at room temperature then heated slowly to 165°C to remove by distillation during 6 hours 145 g generated isopropyl alcohol, thereafter the reaction mixture was cooled to 50°C, 500 ml acetone was added and stirred for 30 min at 50°C The reaction mixture was cooled to room temperature and the solid was filtered off. The solid was washed with 250 ml of acetone. The product was dried at 120°C for 3 hrs in an oven. The weight of white solid was 105 g (97.2% yield). The time needed for this reaction was more than 10 hours due to the 6 hours distillation time. This is much longer than the time needed to complete the reaction according to example 1, which is about 5 hours.

### Comparative Experiment B

14.2 g (0.228 mol) of ethylene glycol was added slowly (in an hour) to the mixture of 24.0 g of Titanium isopropoxide (0.084 mol) and 130 ml toluene at room temperature over 10 min. The resulting mixture was heated slowly to 110°C and a gentle refluxed was maintained for another 1 hr. The resulting reaction mixture was cooled and the solid was not filterable.

Toluene is not a protic solvent. This experiment shows that a protic solvent is needed to obtain a good titanium glycolate product.

### Comparative Experiment C

104.2 g (1.68 mol) of ethylene glycol was added slowly (in an hour) to the mixture of 95.5 g of Titanium isopropoxide (0.336 mol) and 100 ml isopropyl alcohol at room temperature. The resulting mixture was heated slowly to 85°C and a gentle refluxed was maintained for another 4 hr. The resulting reaction mixture was cooled to room temperature and the solid was filtered off. The filtered solid was washed with 100 ml of acetone and then dried at 120°C for 3 hours in an oven. The weight of white solid was 55 g (97.6% yield); Titanium content: 26.64 wt% on the weight of white solid.

In this experiment the molar ratio of titanium isopropoxide to ethylene glycol was 1:5. This is outside the range given for the present invention. A product with a lower Ti content compared to the Ti content of Example 1 was obtained.

## Claims

1. Process for the preparation of titanium glycolate comprising the steps of reacting a titanium alkoxide with ethylene glycol in a molar ratio of the titanium alkoxide to ethylene glycol from 1:2 to 1:4 in a protic solvent at a temperature in the range from 50 to 100°C to form titanium glycolate.

2. Process according to claim 1, wherein the titanium alkoxide is titanium propoxide or titanium butoxide.

3. Process according to claim 1 or claim 2, wherein the protic solvent is an alkyl alcohol.

4. Process according to claim 3, wherein the alkyl alcohol is isopropyl alcohol.

5. Process according to claim 3 or claim 4, wherein the structure of the alkyl alcohol used as protic solvent corresponds to the structure of the alkoxide in the titanium alkoxide

6. Process according to any one of claims 1-5, wherein the reaction of the titanium alkoxide with ethylene glycol takes place at a temperature in the range from 70 to 90°C, preferably at the boiling point temperature of the protic solvent.

7. Process according to any one of claims 1-6, further comprising the steps of isolating the titanium glycolate.

8. Process according to any one of claims 1-7, wherein the process does not comprise the step of distilling off the protic solvent.

9. Titanium glycolate obtainable by the process of any one of claims 1-8.

10. Catalyst composition comprising the titanium glycolate of claim 9.

11. Catalyst composition according to claim 10, further comprising an alkali metal glycolate.

12. Catalyst composition according to claim 10, further comprising an antimony (Sb)-compound, a zinc (Zn)-compound and optionally a phosphorous (P)-compound.

13. Process for trans-esterification of an ester comprising the step of reacting an ester with an alcohol in the presence of the catalyst composition of any one of claims 10-12.

14. Process for the preparation of a polyester comprising the step of reacting a carboxylic acid compound with an alcoholic compound in the presence of a catalyst composition of any one of claims 10-12.

15. Polyester, preferably, polyethylene terephthalate obtainable by the process of claim 14.

## Patentansprüche

1. Verfahren zur Herstellung von Titanglykolat, umfassend die Schritte des Umsetzens eines Titanalkoxids mit Ethylenglykol in einem Molverhältnis von Titanalkoxid zu Ethylenglykol von 1:2 bis 1:4 in einem protischen Lösungsmittel bei einer Temperatur im Bereich von 50 bis 100°C zur Bildung von Titanglykolat.

2. Verfahren nach Anspruch 1, bei dem es sich bei dem Titanalkoxid um Titanpropoxid oder Titanbutoxid handelt.

3. Verfahren nach Anspruch 1 oder Anspruch 2, bei dem es sich bei dem protischen Lösungsmittel um einen Alkylalkohol handelt.

4. Verfahren nach Anspruch 3, bei dem es sich bei dem Alkylalkohol um Isopropylalkohol handelt.

5. Verfahren nach Anspruch 3 oder Anspruch 4, bei dem die Struktur des als protisches Lösungsmittel verwendeten Alkylalkohols der Struktur des Alkoxids in dem Titanalkoxid entspricht.

6. Verfahren nach einem der Ansprüche 1-5, bei dem die Umsetzung des Titanalkoxids mit Ethylenglykal bei einer Temperatur im Bereich von 70 bis 90°C, vorzugsweise bei der Siedepunktstemperatur des protischen Lösungsmittels, erfolgt.

7. Verfahren nach einem der Ansprüche 1-6, ferner umfassend die Schritte des Isolierens des Titanglykolats.

8. Verfahren nach einem der Ansprüche 1-7, bei dem das Verfahren keinen Schritt des Abdestillierens des protischen Lösungsmittels umfasst.

9. Titanglykolat, das durch das Verfahren gemäß einem der Ansprüche 1-8 erhältlich ist.

10. Katalysatorzusammensetzung umfassend das Titanglykolat gemäß Anspruch 9.

11. Katalysatorzusammensetzung nach Anspruch 10, ferner umfassend ein Alkalimetallglykolat.

12. Katalysatorzusammensetzung nach Anspruch 10, ferner umfassend eine Antimon(Sb)-Verbindung, eine Zink(Zn)-Verbindung und gegebenenfalls eine Phosphor(P)-Verbindung.

13. Verfahren zur Umesterung eines Esters, umfassend den Schritt des Umsetzens eines Esters mit einem Alkohol in Gegenwart der Katalysatorzusammensetzung gemäß einem der Ansprüche 10-12.

14. Verfahren zur Herstellung eines Polyesters, umfassend den Schritt des Umsetzens einer Carbonsäureverbindung mit einer alkoholischen Verbindung in Gegenwart einer Katalysatorzusammensetzung gemäß einem der Ansprüche 10-12.

15. Polyester, vorzugsweise Polyethylenterephthalat, der durch das Verfahren gemäß Anspruch 14 erhältlich ist.

## Revendications

1. Procédé de préparation de glycolate de titane comprenant les étapes de
réaction d'un alkoxyde de titane avec de l'éthylène glycol dans un rapport molaire de l'alkoxyde de titane sur l'éthylène glycol compris entre 1:2 et 1:4 dans un solvant protique à une température comprise entre 50 et 100 °C pour former du glycolate de titane.

2. Procédé selon la revendication 1, où l'alkoxyde de titane est du propoxyde de titane ou du butoxyde de titane.

3. Procédé selon la revendication 1 ou la revendication 2, où le solvant protique est un alcool alkylique.

4. Procédé selon la revendication 3, où l'alcool alkylique est l'isopropanol.

5. Procédé selon la revendication 3 ou la revendication 4, où la structure de l'alcool alkylique utilisé comme solvant protique correspond à la structure de l'alkoxyde dans l'alkoxyde de titane.

6. Procédé selon l'une quelconque des revendications 1 à 5, où la réaction de l'alkoxyde de titane avec de l'éthylène glycol a lieu à une température comprise entre 70 et 90 °C, préférentiellement à la température d'ébullition du solvant protique.

7. Procédé selon l'une quelconque des revendications 1 à 6, comprenant en outre les étapes d'isolement du glycolate de titane.

8. Procédé selon l'une quelconque des revendications 1 à 7, où le procédé ne comprend pas l'étape d'élimination par distillation du solvant pratique.

9. Glycolate de titane pouvant être obtenu par le procédé selon l'une quelconque des revendications 1 à 8.

10. Composition de catalyseur comprenant le glycolate de titane selon la revendication 9.

11. Composition de catalyseur selon la revendication 10, comprenant en outre un glycolate de métal alcalin.

12. Composition de catalyseur selon la revendication 10, comprenant en outre un composé d'antimoine (Sb), un composé de zinc (Zn) et éventuellement un composé de phosphore (P).

13. Procédé de transestérification d'un ester comprenant l'étape de réaction d'un ester avec un alcool en présence de la composition de catalyseur selon l'une quelconque des revendications 10 à 12.

14. Procédé de préparation d'un polyester comprenant l'étape de réaction d'un acide carboxylique avec un composé alcoolique en présence d'une composition de catalyseur selon l'une quelconque des revendications 10 à 12.

15. Polyester, préférentiellement polyéthylène téréphtalate, pouvant être obtenu par le procédé selon la revendication 14.
